# EUROPÄISCHE PATENTANMELDUNG

(11) **EP 2 816 336 A1**
(43) Veröffentlichungstag der Anmeldung: **24.12.2014**
(21) Anmeldenummer: 13172802.4
(22) Anmeldetag: 19.06.2013
(51) Int. Cl.: G01L 19/06, G01M 1/22

(54) **Auswuchtanlage**

(71) Anmelder: Siemens Aktiengesellschaft, 80333 München (DE)
(72) Erfinder: Kainka, Ullrich, 45276 Essen (DE); Westner, Ansgar, 10249 Berlin (DE)

(57) **Zusammenfassung**

Die Erfindung betrifft eine Auswuchtanlage (1; 18) mit einem Fundament (2), zumindest zwei eine auszuwuchtende Welle (3) aufnehmenden Lagerböcken (4, 5) und einer zum hochtourigen Drehen der Welle (3) ausgelegten Antriebseinheit (6), wobei die Lagerböcke (4, 5) und die Antriebseinheit (6) im bestimmungsgemäßen Zustand auf dem Fundament (2) angeordnet sind, dadurch gekennzeichnet, dass ein Tragrahmen (7) vorgesehen ist, an dem das Fundament (2) aufgenommen ist, wobei zwischen dem Fundament (2) und dem Tragrahmen (7) eine Vielzahl von Federelementen (8) angeordnet ist, und dass das Fundament (2) und der Tragrahmen (7) transportabel ausgeführt sind. Ferner betrifft die Erfindung ein Verfahren zum hochtourigen Auswuchten einer Welle.

## Beschreibung

Die vorliegende Erfindung betrifft eine Auswuchtanlage mit einem Fundament, zumindest zwei eine auszuwuchtende Welle aufnehmenden Lagerböcken und einer zum hochtourigen Drehen der Welle ausgelegten Antriebseinheit, wobei die Lagerböcke und die Antriebseinheit im bestimmungsgemäßen Zustand auf dem Fundament angeordnet sind. Ferner betrifft die vorliegende Erfindung ein Verfahren zum hochtourigen Auswuchten einer Welle unter Verwendung einer Auswuchtanlage, insbesondere einer Auswuchtanlage der zuvor genannten Art.

Zum Verringern oder Beseitigen einer Wellenunwucht, die während des Betriebs einer Anlage zu Vibrationen und damit zu erhöhtem Verschleiß führen kann, werden Wellen durch Ausgleich der Masseverteilung ausgewuchtet. Beim hochtourigen Auswuchten von Wellen aus Kraftwerks- und Industrieanwendungen kommen dabei stationäre Auswuchtanlagen zum Einsatz, deren Fundament aufgrund der großen Abmessungen und des hohen Eigengewichts der Wellen starr und im Erdreich ruhend ausgebildet ist. Im einfachsten Fall umfassen solche Auswuchtanlagen neben dem Fundament zwei Lagerböcke, welche die auszuwuchtende Welle aufnehmen, und eine zum Drehen der Welle ausgelegte Antriebseinheit, wobei die Lagerböcke und die Antriebseinheit auf dem Fundament montiert sind.

Werden Auswuchtarbeiten an einer Welle im Anschluss an Wartungs- oder Reparaturarbeiten erforderlich, so tritt häufig das logistische Problem auf, dass sich keine hochtourige Auswuchtanlage in der Nähe derjenigen Kraftwerks- oder Industrieanlage befindet, in der die Welle im Einsatz ist. Entsprechend muss die auszuwuchtende Welle per Schwerlasttransport, Eisenbahn oder Schiff zum Standort einer stationären Auswuchtanlage transportiert werden, was mit hohem Aufwand und erheblichen Kosten verbunden ist, wobei ein Großteil dieser Kosten auf lange Stillstandszeiten der entsprechenden Kraftwerks- oder Industrieanlage zurückzuführen ist.

Zur Reduzierung der Kosten ist es bekannt, Wellen im eingebauten Zustand hochtourig auszuwuchten. Bei Kraftwerksanwendungen spricht man von hochtourigem Auswuchten ab Drehzahlen von 1500/min, wobei insbesondere Drehzahlen von 1500/min, 1800/min, 3000/min oder 3600/min und einer Sicherheitsfahrt von + 20%-25% zum Einsatz kommen. Bei industriellen Anwendungen sind noch höhere Drehzahlen möglich.

Ein wesentlicher Nachteil besteht allerdings darin, dass im eingebauten Zustand nicht mehr alle möglichen Montagepositionen für Auswuchtgewichte zugänglich sind, weshalb Kompromisse bezüglich der zu erreichenden Laufruhe der Welle eingegangen werden müssen. Derartige Kompromisse sind in vielen Fällen jedoch unerwünscht.

Eine weitere Möglichkeit besteht darin, Wellen niedertourig auszuwuchten. Das niedertourige Auswuchten von im Betrieb hochtourigen Wellen ist allerdings nur bei sogenannten starren Wellen sinnvoll, deren erste kritische Drehzahl weit oberhalb der Betriebsdrehzahl liegt. Bei im rotordynamischen Sinne elastischen Wellen, die dieses Kriterium nicht erfüllen, werden hingegen nur mäßige Ergebnisse erzielt. Das niedertourige Auswuchten erfreut sich dennoch selbst bei elastischen Wellen recht großer Beliebtheit, da es auf einer herkömmlichen Drehmaschine oder in einer ähnlichen Vorrichtung mit geringem Aufwand realisiert werden kann.

Ausgehend von diesem Stand der Technik ist es eine Aufgabe der vorliegenden Erfindung, eine Auswuchtanlage der eingangs genannten Art sowie ein Auswuchtverfahren zu schaffen, die ein hochtouriges Auswuchten von Wellen, insbesondere von Wellen aus Kraftwerks- und Industrieanwendungen, bei geringen Kosten und gutem Auswuchtergebnis ermöglichen.

Zur Lösung dieser Aufgabe schafft die vorliegende Erfindung eine Auswuchtanlage der eingangs genannten Art, die dadurch gekennzeichnet ist, dass ein Tragrahmen vorgesehen ist, an dem das Fundament aufgenommen ist, wobei zwischen dem Fundament und dem Tragrahmen eine Vielzahl von Federelementen angeordnet ist, und dass das Fundament und der Tragrahmen transportabel ausgeführt sind.

Im Gegensatz zu bekannten Auswuchtanlagen mit starrem, im Erdreich ruhenden Fundament ist die erfindungsgemäße Auswuchtanlage also mobil, so dass sie zu einer Anlage, in der eine auszuwuchtende Welle im Betrieb ist, transportiert werden kann. Auf diese Weise können die Stillstandszeiten der Anlage und damit auch die mit einem Auswuchten einhergehenden Kosten minimiert werden. Eine solche mobile Auswuchtanlage eignet sich insbesondere für leichte bis mittelschwere Wellen mit Außendurchmessern bis ca. 2.000 mm, wie sie beispielsweise als Hochdruck- und Mitteldruckwellen von Dampfturbinen, Generatorwellen oder Verdichterwellen eingesetzt werden. Für schwerere Wellen mit größeren Außendurchmessern, wie sie beispielsweise als Niederdruckwellen von Dampfturbinen zum Einsatz kommen, ist die erfindungsgemäße mobile Auswuchtanlage hingegen nur bedingt geeignet.

Gemäß einer Ausgestaltung der vorliegenden Erfindung ist/sind das Fundament oder der Rahmen segmentiert ausgeführt, also in einzelne Segmente unterteilt. Derartige Segmente lassen sich einfacher lagern und transportieren. Vor Ort können sie dann unter Verwendung geeigneter Befestigungsmittel problemlos montiert werden.

Vorteilhaft ist zwischen dem Fundament und dem Tragrahmen eine Vielzahl von Dämpfern angeordnet, um während des Betriebs auftretende Schwingungen zu dämpfen. Dank solcher Dämpfer kann während des Betriebs der Auswuchtanlage eine bessere Laufruhe der Welle gewährleistet werden.

Vorteilhaft ist zwischen dem Fundament und dem Tragrahmen eine Vielzahl von Feder-Dämpfer-Paketen angeordnet, was zu einem einfachen Aufbau führt, der leicht montiert und demontiert werden kann.

Gemäß einer Ausgestaltung greifen zwischen dem Fundament und dem Tragrahmen angeordnete Federelemente und/oder Dämpfer und/oder Feder-Dämpfer-Pakete von unten an dem Fundament an.

Vorteilhaft greifen zwischen dem Fundament und dem Tragrahmen angeordnete Federelemente und/oder Dämpfer und/oder Feder-Dämpfer-Pakete auch seitlich an dem Fundament an, insbesondere an allen Seiten des Fundaments. Auf diese Weise wird eine optimale Lagerung des Fundamentes am Tragrahmen realisiert.

Gemäß einer Ausgestaltung der vorliegenden Erfindung ist der Tragrahmen als Transportcontainer ausgeführt oder in einen solchen integriert. Entsprechend lässt sich die erfindungsgemäße Auswuchtanlage besonders einfach über Land und Wasser sowie per Flugzeug transportieren.

Alternativ ist der Tragrahmen an einem Schiffsrumpf, einem Eisenbahnwagen oder einem Schwerlastzug befestigt oder in einem solchen integriert. Auch auf diese Weise wird eine hohe Flexibilität der erfindungsgemäßen Auswuchtanlage gewährleistet.

Bevorzugt ist eine Kennzeichnung vorgesehen, die das Maximalgewicht einer mit der Auswuchtanlage zu bearbeitenden Welle auf 1/3 des Gewichtes des Fundaments oder weniger beschränkt. Eine solche Kennzeichnung kann beispielsweise in Form einer Plakette, einer Bedienungsanleitung oder dergleichen ausgestaltet sein. Mit einer Beschränkung des Maximalgewichtes einer mit der Auswuchtanlage zu bearbeitenden Welle auf 1/3 des Gewichtes des Fundaments oder weniger wird ein ordnungsgemäßes Arbeitsergebnis sichergestellt.

Vorteilhaft ist eine Haube vorgesehen, die zwischen einer geöffneten Stellung und einer Schließstellung bewegbar ist und eine an den Lagerböcken aufgenommene Welle in ihrer Schließstellung abdeckt. Mit einer solchen Haube wird eine hohe Betriebssicherheit erzielt. Die Haube ist bevorzugt segmentiert ausgeführt, um deren Transport zu erleichtern.

Die Abdeckung ist vorteilhaft zumindest in ihrer Schließstellung am Fundament und/oder am Tragrahmen befestigt und damit gegen ein vollständiges Abheben gesichert.

Gemäß einer Ausgestaltung der vorliegenden Erfindung ist ein zumindest ein Drehwerkzeug aufnehmendes Drehmaschinenmodul vorgesehen, das derart auf dem Fundament montierbar ist, dass das Drehwerkzeug im bestimmungsgemäßen Zustand relativ zu einer von den Lagerböcken aufgenommenen Welle verfahren werden kann, insbesondere entlang drei sich quer zueinander erstreckender Achsen. Mit einem solchen Drehmaschinenmodul kann die erfindungsgemäße Auswuchtanlage auch als Drehmaschine genutzt werden, um an einer auszuwuchtenden Welle vor Ort entsprechende Zerspanbearbeitungen durchführen zu können.

Vorteilhaft ist eine Blockiereinrichtung zur Blockierung der Federelemente und/oder Dämpfer vorgesehen, um eine starre Verbindung zwischen dem Fundament und dem Tragrahmen zu ermöglichen. Eine solche starre Verbindung ist insbesondere während des Transportes der Auswuchtanlage und während einer Bearbeitung eines Werkstücks unter Verwendung des Drehmaschinenmoduls von Vorteil.

Zur Lösung der eingangs genannten Aufgabe schafft die vorliegende Erfindung ferner ein Verfahren zum hochtourigen Auswuchten einer Welle unter Verwendung einer Auswuchtanlage, insbesondere einer erfindungsgemäßen Auswuchtanlage, das die Schritte aufweist: Transport der Auswuchtanlage zu der auszuwuchtenden Welle; hochtouriges Auswuchten der Welle in der Auswuchtanlage und Abtransport der Auswuchtanlage.

Zwischen einzelnen Auswuchtarbeiten kann die Auswuchtanlage an einem strategisch günstigen Standort gelagert werden, von dem aus mehrere Kraftwerks- und/oder Industriestandorte gut erreichbar sind, wo entsprechende Wellen eingesetzt werden. Weitere Merkmale und Vorteile der vorliegenden Erfindung werden anhand der nachfolgenden Beschreibung einer erfindungsgemäßen Auswuchtanlage unter Bezugnahme auf die beiliegende Zeichnung deutlich. Darin ist
- Figur 1: eine schematische Seitenansicht einer Auswuchtanlage gemäß einer Ausführungsform der vorliegenden Erfindung;
- Figur 2: eine schematische Vorderansicht der in Figur 1 dargestellten Auswuchtanlage;
- Figur 3: eine schematische Vorderansicht analog zu Figur 2, die eine Auswuchtanlage gemäß einer zweiten Ausführungsform der vorliegenden Erfindung zeigt; und
- Figur 4: eine schematische Ansicht verschiedener Transportsituationen einer Auswuchtanlage gemäß der vorliegenden Erfindung.

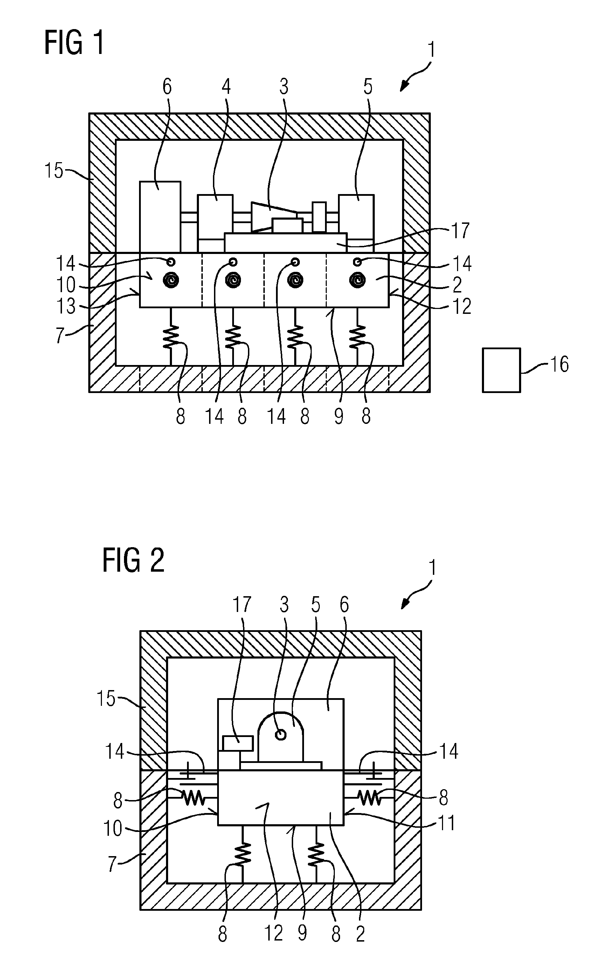

Die Figuren 1 und 2 zeigen eine Auswuchtanlage 1 gemäß einer Ausführungsform der vorliegenden Erfindung. Die Auswuchtanlage 1 umfasst ein Fundament 2, das aus stahlarmiertem Beton hergestellt ist, wobei auch andere Materialien verwendet werden können. Ferner weist die Auswuchtanlage 1 zwei eine auszuwuchtende Welle 3 aufnehmende Lagerböcke 4 und 5 sowie eine zum hochtourigen Drehen der Welle 3 ausgelegte Antriebseinheit 6 auf, wobei die Lagerböcke 4 und 5 und die Antriebseinheit 6 auf dem Fundament 2 angeordnet sind. Die Lagerböcke 4 und 5 und die Antriebseinheit 6 sind fest auf dem Fundament 2 montiert. Alternativ kann aber auch eine lösbare Anordnung gewählt werden, um die Lagerung und den Transport der Auswuchtanlage 1 zu erleichtern. Das Fundament 2 ist in einem Tragrahmen 7 aufgenommen, wobei zwischen dem Fundament 2 und dem Tragrahmen 7 eine Vielzahl von Federelementen 8 angeordnet ist. Genauer gesagt sind Federelemente 8 an der Unterseite 9 sowie an den einander gegenüberliegenden Längsseiten 10 und 11 des Fundamentes vorgesehen, deren Steifigkeit derart gewählt ist, dass eine schwingungsbedingte Kollision der Vorderseite 12 und der Rückseite 13 des Fundamentes 2 mit dem Tragrahmen 7 während des Betriebs der Auswuchtanlage 1 sicher verhindert wird. Das Fundament 2 ist damit federnd in dem Tragrahmen 7 gelagert. Zwischen dem Fundament 2 und dem Tragrahmen 7 ist eine Blockiereinrichtung 14 vorgesehen, die zur Blockierung der Federelemente 8 dient, so dass eine starre Verbindung zwischen dem Fundament 2 und dem Tragrahmen 7 hergestellt werden kann.

Der Tragrahmen 7 ist vorliegend aus Stahl hergestellt, wobei auch andere Materialien in Frage kommen, wie beispielsweise stahlarmierter Beton oder dergleichen. Oberhalb des Tragrahmens 7 ist eine Haube 15 vorgesehen, die zwischen einer geöffneten Stellung und einer Schließstellung bewegbar ist und die Antriebseinheit 6, die Lagerböcke 4 und 5 und die an diesen gehaltene Welle 3 in ihrer Schließstellung abdeckt. Die Haube 15 kann abnehmbar ausgeführt oder zwischen der geöffneten Stellung und der Schließstellung bewegbar an dem Tragrahmen 7 gehalten sein. Sie dient während des Betriebs zur Verbesserung der Sicherheit des Personals. Zur Gewährleistung eines ordnungsgemäßen Betriebs der Auswuchtanlage 1 sollte das Maximalgewicht einer mit der Auswuchtanlage 1 zu bearbeitenden Welle 3 auf 1/3 des Gewichtes des Fundaments 2 oder weniger beschränkt sein. Hierzu ist eine Kennzeichnung 16 vorgesehen, die den Bediener auf diese Beschränkung hinweist. Bei der Kennzeichnung 16 kann es sich beispielsweise um eine Plakette handeln, die an der Auswuchtanlage 1 angeordnet ist, oder um eine Bedienungsanleitung, die der Auswuchtanlage 1 beigefügt ist.

Optional kann die Auswuchtanlage 1 ein Drehmaschinenmodul 17 mit Werkzeughalter und Führung aufweisen, das lösbar an dem Fundament 2 befestigt werden kann. Entsprechend kann mit der Auswuchtanlage 1 auch eine Drehbearbeitung erfolgen.

Ein wesentlicher Vorteil der in den Figuren 1 und 2 dargestellten Auswuchtanlage 1 besteht darin, dass diese aufgrund der Lagerung des Fundamentes 2 innerhalb des Tragrahmens 7 mobil und somit transportabel ausgeführt ist. Entsprechend lässt sie sich bedarfsgerecht zu einer Kraftwerks- oder Industrieanlage transportieren, in der eine Welle verwendet wird, die mit der Auswuchtanlage 1 ausgewuchtet werden soll. Durch den Transport der Auswuchtanlage 1 zum Standort der auszuwuchtenden Welle 3 können Stillstandszeiten der Kraftwerks- oder Industrieanlage verringert und auf diese Weise die mit einem Auswuchten einhergehenden Kosten gesenkt werden.

Das Fundament 2 und/oder der Tragrahmen 7 und/oder die Haube 14 können segmentiert ausgeführt sein, wie es in Figur 1 durch die gestrichelten Linien angedeutet ist. Dies hat den Vorteil, dass sich die einzelnen Segmente einfacher transportieren lassen. Bei der Montage der Auswuchtanlage 1 vor Ort können das Fundament 2 und/oder der Tragrahmen 7 und/oder die Haube 14 dann durch Verbinden der einzelnen Segmente unter Verwendung entsprechender Befestigungsmittel zusammengesetzt werden.

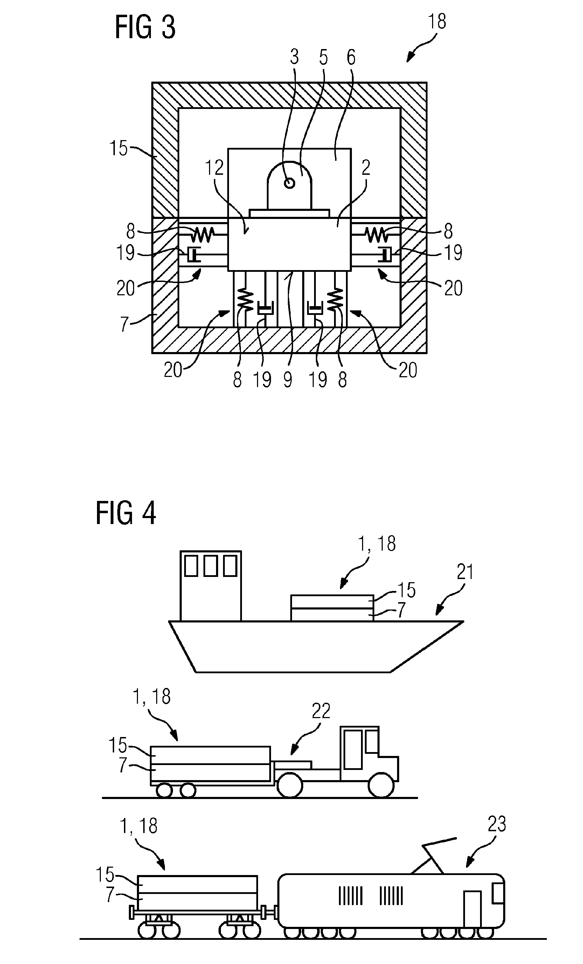

Figur 3 zeigt eine Auswuchtanlage 18 gemäß einer zweiten Ausführungsform der vorliegenden Erfindung, deren Aufbau im Wesentlichen dem Aufbau der in den Figuren 1 und 2 dargestellten Auswuchtanlage 1 entspricht, weshalb gleiche oder gleichartige Bauteile mit den gleichen Bezugsziffern wie in den Figuren 1 und 2 bezeichnet sind. Neben den Federelementen 8 sind bei der Auswuchtanlage 18 zwischen dem Fundament 2 und dem Tragrahmen 7 zusätzlich Dämpfer 19 angeordnet, wobei die Federelemente 8 und die Dämpfer 19 jeweils zu Feder-Dämpfer-Paketen 20 zusammengefasst sind. Entsprechend wird bei der Auswuchtanlage 18 nicht nur eine Federung sondern auch eine Dämpfung zwischen dem Fundament 2 und dem Tragrahmen 7 realisiert.

Zum Auswuchten einer Welle 3 unter Verwendung der Auswuchtanlage 1 oder 18 wird die Auswuchtanlage 1, 18 in einem ersten Schritt zu derjenigen Kraftwerks- oder Industrieanlage transportiert, in der die Welle 3 im Einsatz ist. Während des Transports sollte die Blockiereinrichtung 14 die Federelemente 8 und/oder die Dämpfer 17 blockieren, um Beschädigungen zu verhindern. Der Transport kann unter Verwendung eines Transportcontainers per Flugzeug, Schiff, Eisenbahn oder Lkw erfolgen. Gemäß einer Ausführungsform der vorliegenden Erfindung kann der Tragrahmen 7 auch selbst als Transportcontainer ausgeführt oder in einem solchen integriert sein. Alternativ kann der Tragrahmen 7, wie es in Figur 4 schematisch dargestellt ist, auch am Rumpf eines Schiffs 21, an einem Eisenbahnwagen 22 oder an einem Schwerlastzug 23 befestigt oder in einem solchen integriert sein. Vor Ort wird die Auswuchtanlage 1, 18 dann, sollte sie für den Transport zerlegt worden sein, montiert. In einem weiteren Schritt wird die Welle 3 aus der Kraftwerks- oder Industrieanlage ausgebaut, unter Verwendung der Auswuchtanlage 1, 18 ausgewuchtet und anschließend wieder montiert. Bedarfsweise kann auch eine Drehbearbeitung unter Verwendung des Drehmaschinenmoduls 14 erfolgen. Anschließend erfolgt der Abtransport der Auswuchtanlage 1, 18.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Auswuchtanlage (1; 18) mit einem Fundament (2), zumindest zwei eine auszuwuchtende Welle (3) aufnehmenden Lagerböcken (4, 5) und einer zum hochtourigen Drehen der Welle (3) ausgelegten Antriebseinheit (6),
wobei die Lagerböcke (4, 5) und die Antriebseinheit (6) im bestimmungsgemäßen Zustand auf dem Fundament (2) angeordnet sind,
**dadurch gekennzeichnet, dass**
ein Tragrahmen (7) vorgesehen ist, an dem das Fundament (2) aufgenommen ist,
wobei zwischen dem Fundament (2) und dem Tragrahmen (7) eine Vielzahl von Federelementen (8) angeordnet ist, und dass das Fundament (2) und der Tragrahmen (7) transportabel ausgeführt sind.

2. Auswuchtanlage (1; 18) nach Anspruch 1,
**dadurch gekennzeichnet, dass**
das Fundament (2) und/oder der Tragrahmen (7) segmentiert ausgeführt ist/sind.

3. Auswuchtanlage (1; 18) nach einem der vorhergehenden Ansprüche,
**dadurch gekennzeichnet, dass**
zwischen dem Fundament (2) und dem Tragrahmen (7) eine Vielzahl von Dämpfern (17) angeordnet ist.

4. Auswuchtanlage (1; 18) nach Anspruch 3,
**dadurch gekennzeichnet, dass**
zwischen dem Fundament (2) und dem Tragrahmen (7) eine Vielzahl von Feder-Dämpfer-Paketen (20) angeordnet ist.

5. Auswuchtanlage (1; 18) nach einem der vorhergehenden Ansprüche,
**dadurch gekennzeichnet, dass**
zwischen dem Fundament (2) und dem Tragrahmen (7) angeordnete Federelemente (8) und/oder Dämpfer (19) und/oder Feder-Dämpfer-Pakete (20) von unten an dem Fundament angreifen.

6. Auswuchtanlage (1; 18) nach Anspruch 5,
**dadurch gekennzeichnet, dass**
zwischen dem Fundament (2) und dem Tragrahmen (7) angeordnete Federelemente (8) und/oder Dämpfer (19) und/oder Feder-Dämpfer-Pakete (20) seitlich an dem Fundament (2) angreifen,
insbesondere an allen Seiten (10, 11, 12, 13) des Fundaments (2).

7. Auswuchtanlage (1; 18) nach einem der vorhergehenden Ansprüche,
**dadurch gekennzeichnet, dass**
der Tragrahmen (7) als Transportcontainer ausgeführt oder in einen solchen integriert ist.

8. Auswuchtanlage (1; 18) nach einem der Ansprüche 1 bis 6,
**dadurch gekennzeichnet, dass**
der Tragrahmen (7) an einem Rumpf eines Schiffes (21), einem Eisenbahnwagen (22) oder einem Schwerlastzug (23) befestigt oder in einen solchen integriert ist.

9. Auswuchtanlage (1) nach einem der vorhergehenden Ansprüche,
**dadurch gekennzeichnet, dass**
eine Kennzeichnung (16) vorgesehen ist, die das Maximalgewicht einer mit der Auswuchtanlage(1; 18) zu bearbeitenden Welle (3) auf 1/3 des Gewichtes des Fundaments (2) oder weniger beschränkt.

10. Auswuchtanlage (1; 18) nach einem der vorhergehenden Ansprüche,
**dadurch gekennzeichnet, dass**
eine Haube (15) vorgesehen ist, die zwischen einer geöffneten Stellung und einer Schließstellung bewegbar ist und eine an den Lagerböcken (4, 5) aufgenommene Welle (3) in ihrer Schließstellung abdeckt,
wobei die Haube insbesondere segmentiert ausgeführt ist.

11. Auswuchtanlage (1; 18) nach Anspruch 10,
**dadurch gekennzeichnet, dass**
die Haube (15) zumindest in ihrer Schließstellung am Tragrahmen (7) befestigt ist.

12. Auswuchtanlage (1; 18) nach einem der vorhergehenden Ansprüche,
**dadurch gekennzeichnet, dass**
ein zumindest ein Drehwerkzeug aufnehmendes Drehmaschinenmodul (17) vorgesehen ist, das derart auf dem Fundament (2) montierbar ist, dass das Drehwerkzeug im bestimmungsgemäßen Zustand relativ zu einer von den Lagerböcken (4, 5) aufgenommenen Welle (3) verfahren werden kann,
insbesondere entlang drei sich quer zueinander erstreckender Achsen.

13. Verfahren zum hochtourigen Auswuchten einer Welle (3) unter Verwendung einer Auswuchtanlage,
insbesondere einer Auswuchtanlage (1; 18) nach einem der vorhergehenden Ansprüche, das die Schritte aufweist:
- Transport der Auswuchtanlage (1; 18) zu der auszuwuchtenden Welle (3);
- hochtouriges Auswuchten der Welle (3) in der Auswuchtanlage (1; 18) und
- Abtransport der Auswuchtanlage.
